# EUROPÄISCHE PATENTSCHRIFT

(11) **EP 0 560 758 B1**
(45) Veröffentlichungstag und Bekanntmachung des Hinweises auf die Patenterteilung: **10.08.1994**
(21) Anmeldenummer: 90912741.7
(22) Anmeldetag: 05.09.1990
(51) Int. Cl.: A46B 13/02, F16H 21/40

(54) **ELEKTRISCH ANTREIBBARE ZAHNBÜRSTE**
ELECTRIC TOOTHBRUSH
BROSSE A DENTS ELECTRIQUE

(30) Priorität: 14.11.1989 DE 3937854
(43) Veröffentlichungstag der Anmeldung: 22.09.1993
(73) Patentinhaber: Braun Aktiengesellschaft, Frankfurt am Main (DE)
(72) Erfinder: HERZOG, Karl, D-6000 Frankfurt am Main 90 (DE); GASSNER, Gustav, D-6233 Kelkheim (DE)
(86) Internationale Anmeldenummer: DE9000671
(87) Internationale Veröffentlichungsnummer: WO9107115

(56) Entgegenhaltungen:
- EP-A- 0 110 327
- CH-A- 384 539
- FR-A- 2 368 854
- GB-A- 369 600
- US-A- 2 549 561
- US-A- 3 106 732

## Beschreibung

Die Erfindung geht aus von einer elektrisch antreibbaren Zahnbürste mit einem in einem Handgriff angeordneten Elektromotor, der über ein Getriebe und eine von diesem angetriebene Umsteuerungsvorrichtung ein drehbar gelagertes Zahnbürstenteil oszillierend antreibt, wobei das Getriebe als Gelenkviereck ausgebildet ist, welches eine mittels des Elektromotors antreibbare Kurbel aufweist, die mittels einer Koppel über eine Schwinge wenigstens mittelbar eine Antriebswelle des Zahnbürstenteils oszillierend antreibt.

Eine derartige Zahnbürste ist bereits aus der CH 384539 A bekannt. Allerdings weist die dort angegebene, spezielle Ausbildung des Kurbelgetriebes eine insbesondere für Zahnbürsten unerwünscht hohe Bauform auf. Die Kurbel ist fliegend, d.h. einseitig gelagert, wodurch die Bauhöhe zusätzlich vergrößert wird. Andererseits ist das Lager der Kurbel größerem Verschleiß während des Betriebs der Zahnbürste ausgesetzt. Schließlich besteht bei dieser Ausbildung des Kurbelgetriebes, welches im Gehäuse gegen äußere Einflüsse gekapselt ist, das Problem der ausreichenden Versorgung der Lager mit Schmiermittel.

Aus der EP 0 054 043 B1 ist eine weitere elektrisch angetriebene Zahnbürste bekannt. Der Elektromotor treibt über eine Abtriebswelle und ein Planetenradgetriebe eine in einem hülsenartigen Schaft angeordnete Antriebswelle für ein Zahnbürstenteil an. Die Antriebswelle weist hierzu an ihrem Abtriebsende einen exzentrisch angeordneten Zapfen auf, der über die Antriebswelle in Drehbewegung versetzt wird und In einer Schlitzführung eines Antriebsteiles für das Zahnbürstenteil geführt ist, dessen Achse die Achse der Antriebswelle in einem Winkel schneidet. Durch die umlaufende Drehung des Zapfens wird der Antriebsteil für das Zahnbürstenteil in eine gegenläufige, bzw. oszillierende Drehbewegung versetzt. Eine derartige Bewegungsumsetzung von der rotierenden Bewegung des Motors in eine oszillierende Bewegung des Bürstenteils läßt jedoch nur einen sehr kleinen Drehwinkel zu, da die Schlitzführung zur Verringerung der Reibwiderstände einen entsprechend großen Abstand zur Drehachse des Zahnbürstenteils aufweisen sollte. Je weiter die Schlitzführung an die Drehachse des Zahnbürstenteils herangeführt wird, umso größer werden auch die Reibwiderstände und somit auch die Geräuschentwicklung beim Betrieb der Zahnbürste. Der relativ große Reibwiderstand des in der Schlitzführung geführten Zapfens führt auch zu einem sehr starken Verschleiß, so daß die Standzeit der Antriebselemente recht gering ist.

Die EP 0 110 327 A2 zeigt eine elektrisch angetriebene Zahnbürste mit oszillierender Schwingung, deren Schwingungswinkel unterschiedlich einstellbar ist. Insbesondere weist die Zahnbürste ein von dem Elektromotor angetriebenes Stirnradgetriebe auf.

Aus der US 3 106 732 A ist eine Zahnbürste zu entnehmen, die einen rotierenden Bürstenkopf aufweist, der rechtwinklig zur Längsachse der Zahnbürste angeordnet und über ein Winkelgetriebe in Drehung versetzbar ist.

Die GB 369 600 A offenbart eine Zahnbürste, deren drehbarer Bürstenkopf rechtwinklig zur Bürstenlängsachse der Zahnbürste angeordnet Ist, wobei das Bürstenteil auf eine Abtriebswelle aufsteckbar und mit dieser kuppelbar ist.

Die FR 2 368 854 A zeigt eine elektrisch angetriebene Zahnbürste mit oszillierender Schwingung, wobei die Schwingung Werte zwischen 55 und 66 Hertz annimmt.

Demgegenüber liegt der Erfindung die Aufgabe zugrunde, eine platzsparende Anordnung des Gelenkvierecks im Gehäuse der Zahnbürste zu erhalten und die Lebensdauer des Gelenkvierecks zu erhöhen.

Diese Aufgabe wird dadurch gelöst, daß die Kurbel als Exzenterscheibe und die Koppel als Pleuel ausgebildet und das Pleuel ein Lagerauge aufweist, in dem die Exzenterscheibe drehbar aufgenommen ist, wobei die Exzenterscheibe von einer Achse durchsetzt ist, die in einem Lagerbock und einer Lagerplatte drehbar aufgenommen ist. Eine platzsparende Anordnung des Gelenkvierecks Im Gehäuse der Zahnbürste erhält man dadurch, daß das Gelenkviereck eine mittels des Elektromotors antreibbare, als Exzenterscheibe ausgebildete Kurbel aufweist, die mittels einer als Pleuel ausgebildeten Koppel über eine Schwinge eine Antriebswelle des Zahnbürstenteils oszillierend antreibt. Wesentlicher Vorteil dieser Exzenterscheibe ist, daß die Antriebswelle auf zwei Lagern ruht und nicht fliegend ausgeführt wird. Da das Pleuel ein Lagerauge aufweist, in dem die Exzenterscheibe drehbar aufgenommen ist, die fest mit einer Antriebswelle verbunden ist, wird die Bauhöhe des Getriebes verringert und auch für einen guten Halt der Schmiermittel an den Lagerstellen gesorgt. Dabei ist es vorteilhaft, daß auf der Achse ein mit der Exzenterscheibe antriebsverbundenes Stirnrädergetriebe bzw. Stufenrädergetriebe angeordnet ist, das über den Elektromotor angetrieben wird. Hierdurch läßt sich auf wirtschaftliche Weise die relativ hohe Drehzahl des Elektromotors auf die gewünschte Abtriebdrehzahl reduzieren, so daß der Zahnbürstenteil in der gewünschten Frequenz schwingt.

Ferner ist es vorteilhaft, daß die Antriebswelle über ein Winkelgetriebe mit dem Zahnbürstenteil antriebsverbunden ist. Die Verwendung eines Winkelgetriebes ermöglicht es, das Zahnbürstenteil, dessen Drehachse in etwa rechtwinklig zur Achse der Antriebswelle angeordnet ist, geräuscharm anzutreiben. Hierzu ist es vorteilhaft, daß das Winkelgetriebe aus einem auf der Antriebswelle angeordneten Kegelrad und einem mit dem Zahnbürstenteil verbundenen Kegelrad besteht, und in einem am Ende des hülsenartigen Schaftes angeordneten Winkelgetriebegehäuse aufgenommen ist.

Die Handhabung des Zahnbürstenteils wird dadurch erleichtert, daß der hülsenartige Schaft mit der Antriebswelle und dem Winkelgetriebe eine Baugruppe bildet, die auf die Abtriebswelle des Gelenkviereckes aufsteckbar und mit dieser kuppelbar ist.

Ferner ist es vorteilhaft, daß die Achse zur Aufnahme der Exzenterscheibe und des Innenzahnrades einenends in einem die Abtriebswelle aufnehmenden Lagerbock und anderenends in einer im Gehäuse angeordneten Lagerplatte aufgenommen ist, durch die sich die Abtriebswelle des Elektromotors erstreckt. Hierdurch erhält man eine sehr kompakte, platzsparende Anordnung der Getriebeteile. Damit der Benutzer die Bürstenbewegung während des Reinigungsvorganges beim Einsatz der alternierend rotierenden bzw. oszillierenden Zahnbürste als nicht unangenehm empfindet, ist es vorteilhaft, daß der Zahnbürstenteil zwischen 30 Hz und 60 Hz, bevorzugt mit 45 - 50 Hz, schwingt.

Weitere Vorteile ergeben sich aus der nachfolgenden Beschreibung und den Zeichnungen, in denen ein bevorzugtes Ausführungsbeispiel dargestellt ist. Es zeigen:
- Fig. 1: eine schematische Darstellung des Gelenkviereckes zum oszillierenden Antrieb eines Zahnbürstenteils einer elektrisch angetriebenen Zahnbürste,
- Fig. 2: einen in die Zeichenebene geklappten Längsschnitt des Gelenkvierecks gemäß Fig. 1,
- Fig. 3: den vorderen Teil der elektrisch angetriebenen Zahnbürste mit dem hülsenartigen Schaft zur Aufnahme der Antriebswelle und mit dem Winkelgetriebe zum Antrieb des Zahnbürstenkörpers,

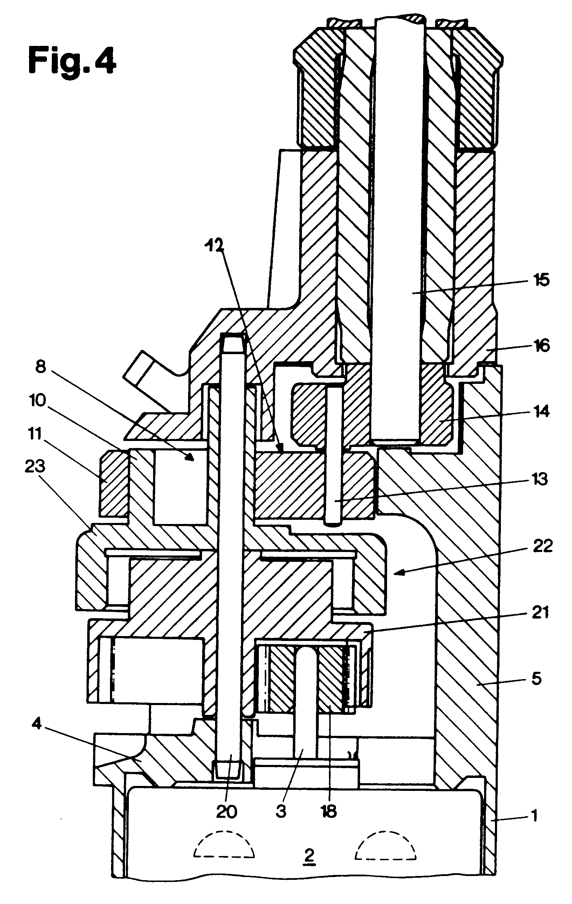

- Fig. 4: das vordere Ende eines im Gehäuse der elektrisch angetriebenen Zahnbürste angeordneten Elektromotors mit dem zugehörigen Gelenkviereck und einer Abtriebswelle, die mit der in dem hülsenartigen Schaft angeordneten Antriebswelle kuppelbar ist.

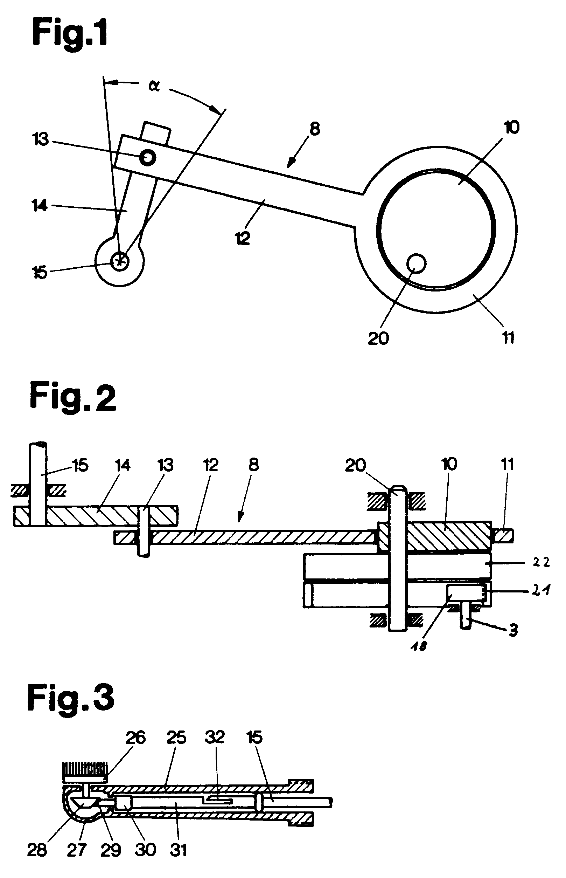

In der Zeichnung ist das vordere Ende eines Innengehäuses mit der Bezugsziffer 1 bezeichnet, das in einem als Handgriff ausgebildeten, nicht dargestellten Außengehäuse aufgenommen werden kann. In dem Innengehäuse 1 sitzt im unteren Bereich ein Elektromotor 2 mit einer Abtriebswelle 3, die sich durch eine Lagerplatte 4 eines sich an das Innengehäuse 1 anschließenden Getriebegehäuses 5 erstreckt. In dem Getriebegehäuse 5 ist ein Gelenkviereck 8 angeordnet, das über die Abtriebswelle 3 angetrieben wird. Das Gelenkviereck 8 besteht aus einer als Exzenterscheibe 10 ausgebildeten Kurbel, die in einem Lagerauge 11 eines als Koppel ausgebildeten Pleuels 12 drehbar aufgenommen ist, das endseitig über einen Gelenkbolzen 13 mit einer Schwinge 14 gelenkig verbunden ist. Wie aus den Figuren 1 und 2 hervorgeht, ist das untere Ende der Schwinge 14 mit einer Abtriebswelle 15 fest verbunden, die in einem mit dem Getriebegehäuse 5 verbundenen Lagerbock 16 drehbar aufgenommen ist.

Die Abtriebswelle 3 steht über ein auf dieser angeordnetes Ritzel 18 und ein auf einer Achse 20 angeordnetes Innenzahnrad 21 mit einer Rutschkupplung 22 in Antriebsverbindung. An der Abtriebsseite 23 der Rutschkupplung 22 ist die Exzenterscheibe 10 angeflanscht oder angeformt, die in dem Lagerauge 11 des Pleuels 12 aufgenommen ist. Die Exzenterscheibe 10 wird ebenfalls von der Achse 20 durchsetzt, welche sich ihrerseits durch das Lagerauge 11 des Pleuels 12 erstreckt und in dem Lagerbock 16 sowie in der Lagerplatte 4 drehbar aufgenommen ist.

Die Schwinge 14 ist an ihrem unteren Ende mit einer Abtriebswelle 15 fest verbunden, die, wie aus Fig. 3 hervorgeht, in einen hülsenartigen Schaft 25 zur drehbaren Aufnahme eines Zahnbürstenteils 26 einsteckbar ist.

Der hülsenartige Schaft 25 weist endseitig ein Winkelgetriebegehäuse 27 auf, in dem das Zahnbürstenteil 26 mit einem Kegelrad 28 drehbar gelagert ist. Das Kegelrad 28 steht mit einem weiteren Kegelrad 29 in Antriebsverbindung, das am vorderen Ende einer Antriebswelle 30 angeordnet ist, die eine Kupplungshülse 31 mit einer Kupplungsbohrung aufweist, in die das vordere Ende der Abtriebswelle 15 einsteckbar ist. Durch das Einstecken der Abtriebswelle 15 in die Kupplungsbohrung wird eine Drehverbindung zwischen den beiden Wellen 15, 30 über einen Schnappverschluß 32 hergestellt. Der hülsenartige Schaft 25 wird zum Betrieb der Zahnbürste auf das vordere Ende des als Handgriff ausgebildeten Außengehäuses drehfest aufgesetzt, wobei die Wellen 15, 30 gekuppelt werden. Nachdem der hülsenartige Schaft 25 an das Griffteil angeschlossen ist, treibt der Elektromotor 2 das Zahnbürstenteil 26 über das Gelenkviereck 8 mit einer Frequenz zwischen 2400 bis 3000 Hüben pro Minute an, derart, daß die Schwinge 14 in einem Winkelbereich von etwa +/- 35° schwingt. In vorteilhafter Weise wird der Zahnbürstenteil 26 mit einer Frequenz von ca. 45 Hz - 50 Hz alternierend angetrieben, wodurch dem Benutzer ein angenehmes Putzempfinden vermittelt und eine optimale Reinigungswirkung erzielt wird.

Anstelle des aus Innenzahnrad 21 und Ritzel 18 gebildeten Stirnrädergetriebes läßt sich auch ein etwas teureres Planetenradgetriebe verwenden. Die Verwendung des Stirnrädergetriebes in Verbindung mit dem Gelenkviereck 8 ermöglicht bei hohen Drehzahlen eine verschleiß-, reibungs- und geräuscharme Übertragung der Motorleistung auf das Zahnbürstenteil 26.

Insgesamt haben Untersuchungen ergeben, daß eine Umsetzung der rotierenden Bewegung der Motorwelle in eine alternierend rotierende Bewegung im Bereich von etwa +/- 35° des winklig zur Motorwelle angeordneten Zahnbürstenteils 26 mittels des beschriebenen Gelenkvierecks 8 in Verbindung mit dem Winkelgetriebe (28, 29) einen bis zu 100 % höheren Wirkungsgrad aufweist als die herkömmliche Bewegungsumsetzung nach dem eingangs beschriebenen Stand der Technik.

Es versteht sich, daß das Gelenkviereck zur Erzeugung einer oszillierenden Drehbewegung nicht nur bei Zahnbürsten mit winklig zur Längsachse angesetzter Bürste eingesetzt werden kann, sondern äußerst vorteilhaft auch bei bekannten Zahnbürstensystemen mit einem herkömmlichen, vertikal und/oder horizontal schwingenden Bürstenkopf (z.B. Braun dental d 3, Art. Nr. 4804) Anwendung findet, wobei der Bürstenkopf bevorzugt eine kreis- bzw. kreissegmentförmige Kontur aufweisen kann.

## Patentansprüche

1. Elektrisch antreibbare Zahnbürste mit einem In einem Handgriff angeordneten Elektromotor (2), der über ein Getriebe und eine von diesem angetriebene Umsteuerungsvorrichtung ein drehbar gelagertes Zahnbürstenteil (26) oszillierend antreibt, wobei das Getriebe als Gelenkviereck (8) ausgebildet ist, welches eine mittels des Elektromotors (2) antreibbare Kurbel aufweist, die mittels einer Koppel über eine Schwinge (14) wenigstens mittelbar eine Antriebswelle (30) des Zahnbürstenteils (26) oszillierend antreibt, dadurch gekennzeichnet, daß die Kurbel als Exzenterscheibe (10) und die Koppel als Pleuel (12) ausgebildet ist und das Pleuel (12) ein Lagerauge (11) aufweist, in dem die Exzenterscheibe (10) drehbar aufgenommen ist, wobei die Exzenterscheibe von einer Achse (20) durchsetzt ist, die in einem Lagerbock (16) und einer Lagerplatte (4) drehbar aufgenommen ist.

2. Zahnbürste nach Anspruch 1, dadurch gekennzeichnet, daß das Zahnbürstenteil winklig zur Längsachse der Zahnbürste angeordnet ist.

3. Zahnbürste nach Anspruch 1, dadurch gekennzeichnet, daß auf der Achse (20) ein mit der Exzenterscheibe (10) antriebsverbundenes Stirnradgetriebe angeordnet ist, das über den Elektromotor (2) angetrieben wird.

4. Zahnbürste nach wenigstens einem der vorhergehenden Ansprüche, dadurch gekennzeichnet, daß das Stirnradgetriebe ein auf einer Antriebswelle (3) des Elektromotors (2) angeordnetes Ritzel (18) aufweist, das mit einem auf der Achse (20) angeordneten Innenzahnrad (21) in Antriebsverbindung steht.

5. Zahnbürste nach einem oder mehreren der vorhergehenden Ansprüche, dadurch gekennzeichnet, daß die Antriebswelle (30) über ein Winkelgetriebe (28, 29) mit dem Zahnbürstenteil (26) antriebsverbunden ist.

6. Zahnbürste nach Anspruch 5, dadurch gekennzeichnet, daß das Winkelgetriebe (28, 29) aus einem auf der Antriebswelle (30) angeordneten Kegelrad (29) und einem mit dem Zahnbürstenteil (26) verbundenen Kegelrad (28) besteht, das mit dem Kegelrad (29) in einem am Ende des hülsenartigen Schaftes (25) angeordneten Winkelgetriebegehäuse (27) aufgenommen ist.

7. Zahnbürste nach wenigstens einem der vorhergehenden Ansprüche, dadurch gekennzeichnet, daß die Drehachse des Zahnbürstenteils (26) in etwa einen Winkel von 90° mit der Antriebswelle (30) bildet.

8. Zahnbürste nach einem der vorhergehenden Ansprüche, dadurch gekennzeichnet, daß der hülsenartige Schaft (25) mit der Antriebswelle (30) und dem Winkelgetriebe (28, 29) eine Baugruppe bildet, die auf eine Abtriebswelle (15) des Gelenkvierecks (8) aufsteckbar und mit dieser kuppelbar ist.

9. Zahnbürste nach Anspruch 3, dadurch gekennzeichnet, daß die Achse (20) zur Aufnahme der Exzenterscheibe (10) und des Innenzahnrades (21) einenends in einem die Abtriebswelle (15) aufnehmenden Lagerblock (16) und anderenends in einer am Gehäuse (1) angeordneten Lagerplatte (4) aufgenommen ist, durch die sich die Abtriebswelle (3) des Elektromotors (2) erstreckt.

10. Zahnbürste nach wenigstens einem der vorhergehenden Ansprüche, dadurch gekennzeichnet, daß der Zahnbürstenteil (26) im Bereich von 30 Hz bis 60 Hz, insbesondere jedoch mit 45 Hz bis 50 Hz oszilliert.

## Claims

1. An electric power driven toothbrush with an electric motor (2) disposed in a handle section and driving, through a driving mechanism and a translating device driven thereby, in an oscillatory manner a rotary toothbrush section (26), in which said driving mechanism is configured as a four-bar linkage (8) including a crank adapted to be driven by means of said electric motor (2), said crank driving in an oscillatory manner at least indirectly a drive shaft (30) of said toothbrush section (26) by a means of a link and through a rocker (14), characterized in that said crank is configured as an eccentric disk (10) and said link as a connecting rod (12), and that said connecting rod (12) includes a bearing eye (11) receiving said eccentric disk (10) in a rotatable relationship thereto, said eccentric disk having extending therethrough a spindle (20) rotatably carried in a bearing block (16) and in a bearing plate (4).

2. The toothbrush as claimed in claim 1, characterized in that said toothbrush section is disposed angularly to the longitudinal axis of said toothbrush.

3. The toothbrush as claimed in claim 1, characterized in that on said spindle (20) a train of spur gears is provided in driving engagement with said eccentric disk (10) and driven by said electric motor (2).

4. The toothbrush as claimed in at least one of the preceding claims, characterized in that said train of spur gears comprises a pinion (18) mounted on an output shaft (3) of said electric motor (2) and making driving connection with an internal gear (21) mounted on said spindle (20).

5. The toothbrush as claimed in one or several of the preceding claims, characterized in that said drive shaft (30) is in driving engagement with said toothbrush section (26) through an angular driving mechanism (28, 29).

6. The toothbrush as claimed in claim 5, characterized in that said angular driving mechanism (28, 29) is comprised of a bevel gear (29) mounted on said drive shaft (30) and a bevel gear (28) connected to said toothbrush section (26), said gears (28, 29) being accommodated in a bevel gear casing (27) arranged at the end of a sleeve-type shank (25).

7. The toothbrush as claimed in at least one of the preceding claims, characterized in that the axis of rotation of said toothbrush section (26) forms an angle of about 90° with said drive shaft (30).

8. The toothbrush as claimed in any one of the preceding claims, characterized in that said sleeve-type shank (25), in combination with said drive shaft (30) and said bevel gear train (28, 29), forms a subassembly which is adapted to be pushed onto an output shaft (15) of said four-bar linkage (8) for coupling engagement therewith.

9. The toothbrush as claimed in claim 3, characterized in that said spindle (20) for mounting said eccentric disk (10) and said internal gear (21) has its one end carried in a bearing block (16) receiving said output shaft (15) while its other end is carried in a bearing plate (4) disposed in the housing (1) and having extending therethrough the output shaft (3) of said electric motor (2).

10. The toothbrush as claimed in at least one of the preceding claims, characterized in that said toothbrush section (26) oscillates at a frequency of between 30 Hz and 60 Hz, in particular between 45 Hz and 50 Hz.

## Revendications

1. Brosse à dents pouvant être commandée électriquement et comportant un moteur électrique (2) qui est agencé dans une poignée et qui, par une transmission et un dispositif de conversion commandé par celle-ci, commande de façon oscillante un élément de brosse à dents (26) monté pour pouvoir tourner, la transmission étant réalisée sous la forme d'un quadrilatère articulé (8) qui présente une manivelle qui peut être commandée par le moteur électrique (2) et qui, au moyen d'une pièce de liaison, commande de façon oscillante par l'intermédiaire d'un bras oscillant (14) au moins de façon indirecte un arbre de commande (30) de l'élément de brosse à dents (26), caractérisé en ce que la manivelle est réalisée sous la forme d'un disque excentrique (10) et la pièce de liaison sous la forme d'une bielle (12) et en ce que la bielle (12) présente un trou de coussinet (11) dans lequel est logé de façon à pouvoir tourner le disque excentrique (10), le disque excentrique étant traversé par un arbre (20) qui est logé, de façon à pouvoir tourner, dans un palier (16) et dans une plaque porteuse (4).

2. Brosse à dents suivant la revendication 1, caractérisée en ce que l'élément de brosse à dent est agencé en angle par rapport à l'axe longitudinal de la brosse à dents.

3. Brosse à dents suivant la revendication 1, caractérisée en ce que sur l'arbre 20 est agencée une transmission à roues droites qui est en liaison de commande avec le disque excentrique (10) et qui est commandée par le moteur électrique (2).

4. Brosse à dents suivant l'une quelconque des revendications précédentes, caractérisée en ce que la transmission à roues droites présente un pignon (18) qui est agencé sur un arbre de sortie (3) du moteur électrique (2) et qui est en liaison de commande avec une roue à denture interne (21) agencée sur l'arbre (20).

5. Brosse à dents suivant une ou plusieurs des revendications précédentes, caractérisée en ce que l'arbre de commande (30) est en liaison de commande avec l'élément de brosse à dents (26) par l'intermédiaire d'un engrenage conique (28, 29).

6. Brosse à dents suivant la revendication 5, caractérisée en ce que l'engrenage conique (28, 29) est constitué d'une roue conique (29) agencée sur l'arbre de commande (30) et d'une roue conique (28) qui est reliée à l'élément de brosse à dents (26) et qui est logée avec la roue conique (29) dans un boîtier d'engrenage conique (27) agencé à l'extrémité de la tige (25) en genre de manchon.

7. Brosse à dents suivant au moins une des revendications précédentes, caractérisée en ce que l'axe de rotation de l'élément de brosse à dents (26) forme approximativement un angle de 90° avec l'arbre de commande (30).

8. Brosse à dents suivant l'une des revendications précédentes, caractérisée en ce que la tige (25) en genre de manchon forme avec l'arbre de commande (30) et l'engrenage conique (28, 29) un groupe constitutif qui peut être monté sur un arbre mené (15) du quadrilatère articulé (8) et qui peut être accouplé à cet arbre.

9. Brosse à dents suivant la revendication 3, caractérisée en ce que l'arbre (20), pour recevoir le disque excentrique (10) et la roue à denture interne (21), est logé, à une extrémité, dans un palier (16) qui reçoit l'arbre mené (15) et, à l'autre extrémité, dans une plaque porteuse (4) qui est agencée sur le boîtier (1) et à travers laquelle s'étend l'arbre de sortie (3) du moteur électrique.

10. Brosse à dents suivant au moins l'une des revendications précédentes, caractérisée en ce que l'élément de brosse à dents (26) oscille dans une plage de 30 Hz à 60 Hz, en particulier cependant à 45 Hz et jusqu'à 50 Hz.
